# EUROPÄISCHE PATENTSCHRIFT

(11) **EP 0 883 209 B1**
(45) Veröffentlichungstag und Bekanntmachung des Hinweises auf die Patenterteilung: **16.05.2001**
(21) Anmeldenummer: 98105293.9
(22) Anmeldetag: 24.03.1998
(51) Int. Cl.: H01R 9/26, H02B 1/052

(54) **Schnellmontagesockel zur Befestigung eines elektrischen Bauteils an einer Tragschiene mit Randleiste**
Quick-fastener for fixing an electrical equipment on a support rail with flanges
Socle à fixation rapide d' un composant électrique sur un rail de support ayant des bords

(30) Priorität: 05.06.1997 CH 208797
(43) Veröffentlichungstag der Anmeldung: 09.12.1998
(73) Patentinhaber: Rockwell Automation AG, CH-5001 Aarau (CH)
(72) Erfinder: Aeschbach, Bruno, 5734 Reinach (CH); Brugger, Daniel, 5034 Suhr (CH); Meili, Hans-Peter, 5703 Seon (CH); Spengler, Karin, 8225 Siblingen (CH); Spengler, Stephan, 8225 Siblingen (CH)
(74) Vertreter: Morva, Tibor

(56) Entgegenhaltungen:
- CH-A- 652 269
- DE-A- 3 203 811
- DE-B- 1 283 318

## Beschreibung

Die vorliegende Erfindung betrifft einen Schnellmontagesockel zur Befestigung eines elektrischen Bauteils an einer Tragschiene mit Randleiste, mit einem Gehäuse aus Kunststoff, mit mindestens einem in einen der Tragschiene zugekehrten Hohlraum des Gehäuses eingelegten Haltefederdraht, der im Betrieb an der Randleiste der Tragschiene federnd ansteht und dabei eine gegenüberliegende Rastnut des Gehäuses an die gegenüberliegende Randleiste der Tragschiene drückt und der bei der Wegnahme des Gehäuses von der Tragschiene durch Verschiebung des Gehäuses gegen die Wirkung des Haltefederdrahtes in das Gehäuse zurückgedrückt werden kann, wobei die Randleiste der Tragschiene an der dem Haltefederdraht gegenüberliegenden Seite des Gehäuses die Rastnut verlässt und die Wegnahme des Gehäuses von der Tragschiene ermöglicht.

Aus der CH-A5-652269 ist ein Schnellmontagesockel der eingangs erwähnten Art bekannt. Bei diesem Schnellmontagesockel besteht das Gehäuse aus einem Kupplungsstück aus Kunststoff, an dem ein elektrisches Gerät oder eine Print-platte befestigt werden kann. In einen einer Tragschiene zugekehrten Hohlraum des Gehäuses ist ein Haltefederdraht aus Rundmaterial eingelegt, der im Betrieb an der Randleiste der Tragschiene mit seiner runden Oberfläche federnd ansteht. Um das Gehäuse von der Tragschiene wegnehmen zu können, wird das Gehäuse quer zur Längsrichtung der Tragschiene gegen die Wirkung des Haltefederdrahtes gedrückt, wobei die Randleiste der Tragschiene an der dem Haltefederdraht gegenüberliegenden Seite die Rastnut verlässt, wonach das Gehäuse von der Tragschiene geschwenkt werden kann. Ein grosser Nachteil dieses Schnellmontagesockels besteht darin, dass der Schnellmontagesockel auf der Tragschiene in Längsrichtung verrutschen kann, weil weder die Rastnut noch das runde Federmaterial des Haltefederdrahtes auf der Tragschiene ein Rutschen verhindern kann.

Die Aufgabe der vorliegenden Erfindung ist es, einen Schnellmontagesockel der eingangs erwähnten Art vorzuschlagen, der auf einer Tragschiene in Längsrichtung nicht verrutschen kann.

Die gestellte Aufgabe ist dadurch gelöst, dass der Endbereich des Haltefederdrahtes scharfkantig abgeschlossen ist, der mit seiner Spitze an der Randleiste der Tragschiene unter einem spitzen Winkel selbstsperrend ansteht, wobei der Haltefederdraht im Gehäuse in die dem an der Tragschiene anstehenden End-bereich abgekehrte Richtung gegen Längsverschiebung gesichert aber eine Ausbiegung zulassend gehalten ist. Diese einfache und wirtschaftlich vorteilhafte Anordnung verhindert ein Rutschen des Schnellmontagesockels auf der Tragschiene.

Der Haltefederdraht kann eine abgewinkelte Form mit zwei zueinander unter einem stumpfen Winkel stehenden Geraden aufweisen, dessen kürzerer Endbereich scharfkantig abgeschlossen ist und mit seiner Spitze an der Randleiste der Tragschiene unter einem spitzen Winkel selbstsperrend ansteht und dessen längerer, daran anschliessender Teilbereich im Gehäuse in die dem kürzeren Endbereich abgekehrte Richtung gegen Längsverschiebung gesichert aber eine Ausbiegung zulassend gehalten ist, wobei der kürzere Endbereich des abgewinkelten Haltefederdrahtes mit der Längsrichtung der Tragschiene einen grösseren spitzen Winkel einschliesst als der am Gehäuse gehaltene längere Teilbereich. Die abgewinkelte Form erlaubt beim Wegnehmen des Schnellmontagesockels von der Tragschiene ein Zurückdrücken des Haltefederdrahtes in das Gehäuse praktisch ohne Veränderung der Lage der an der Randleiste der Tragschiene anstehenden Spitze des Haltefederdrahtes. Das Ende des kürzeren Endbereiches des Haltefederdrahtes gräbt sich mit seiner scharfen Kante in die Randleiste der Tragschiene ein und stützt so das Gehäuse in der gegen die Spitze des spitzen Winkels des kürzeren Endbereiches gerichteten Sperrichtung. Diese Anordnung ist selbstsperrend.

Vorteilhafterweise schliessen zwei einander abgekehrt ausgerichtete Haltefederdrähte an den beiden Enden eines in den Hohlraum des Gehäuses befestigten Basisteils in zwei Biegeknien einstückig an, wobei die Haltefederdrähte und der Basisteil aus einem Federdraht einstückig geformt sind und die beiden Biegeknie an Stützstellen des Gehäuses anstehen. Die zwei einander abgekehrten Haltefederdrähte sichern das Gehäuse gegen Verrutschen auf der Tragschiene in beiden Richtungen. Die mit dem im Gehäuse befestigten Basisteil einstückig aus einem Federdraht geformten Haltefederdrähte ergeben eine einfache Anordnung für die Herstellung und auch für die Montage.

Die längeren Teilbereiche von zwei einander abgekehrten, abgewinkelten Haltefederdrähten können an den beiden Enden eines in den Hohlraum des Gehäuses befestigten Basisteils in zwei Biegeknien einstückig anschliessen, wobei die Haltefederdrähte und der Basisteil aus einem Federdraht einstückig geformt sind und die beiden Biegeknie an Stützstellen des Gehäuses anstehen. Bei dieser Anordnung entsteht beim Zurückdrücken der Haltefederdrähte in das Gehäuse eine vorteilhafte Federung.

Die Befestigung des Basisteils im Gehäuse erfolgt mit Vorteil mit einem an der Mitte und beidseitig von der Mitte im Gehäuse gehaltenen W-förmig gebogenen Teil des Federdrahtes. Diese Art der Befestigung des Basisteils im Gehäuse ist ausserordentlich vorteilhaft montierbar.

Im folgenden wird anhand der beiliegenden Zeichnungen ein Ausführungsbeispiel der Erfindung näher beschrieben. Es zeigen:
- Fig.1: einen auf eine Tragschiene aufgeschnappte Schnellmontagesockel mit Tragschiene von der Tragschiene her gesehen,
- Fig.2: in Längsrichtung gesehen und
- Fig.3: eine perspektivische Darstellung von der Seite der Tragschiene her gesehen.

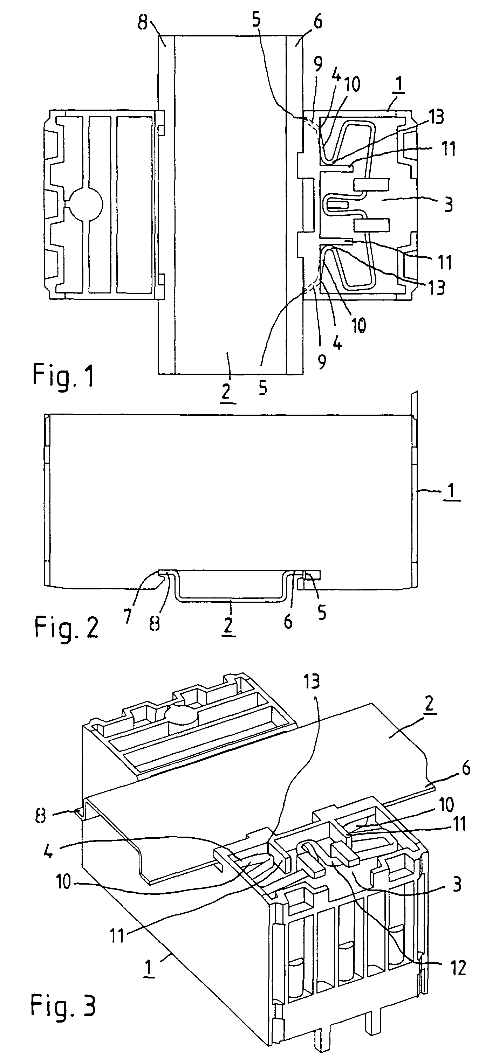

In Fig.1 ist das Gehäuse 1 eines Schnellmontagesockels mit einem Teil einer ihn tragenden Tragschiene 2 dargestellt. Der Schnellmontagesockel dient zur Befestigung von nicht näher dargestellten elektrischen Bauteilen, die zuerst am Gehäuse 1 des Schnellmontagesockels und dann mit dem Schnellmontagesockel an der Tragschiene 2 angebracht werden. Das Gehäuse 1 des Schnellmontagesockels besteht aus Kunststoff und weist an seiner der Tragschiene 2 zugekehrten Seite einen Hohlraum 3 auf. In diesen Hohlraum sind zwei Haltefederdrähte 4 eingelegt die im Betrieb mit den an ihren Enden liegenden Spitzen 5 an der Randleiste 6 der Tragschiene 2 federnd anstehen. Die Haltefederdrähte 4 drücken im Betrieb die in Fig.2 sichtbare Rastnut 7 des Gehäuses 1 an der den Haltefederdrähten 4 gegenüberliegenden Seite des Gehäuses 1 an die Randleiste 8 der Tragschiene 2.

Jeder Haltefederdraht 4 weist an seinem der Tragschiene 2 zugekehrten Teil eine abgewinkelte Form mit zwei zueinander unter einem stumpfen Winkel stehenden Geraden auf, dessen kürzerer Endbereich 9 scharfkantig abgeschlossen ist und mit der Spitze 5 an der Randleiste 6 der Tragschiene 2 unter einem spitzen Winkel ansteht. Der längere, am kürzeren Endbereich 9 anschliessende Teilbereich ist im Gehäuse 1 gegen Längsverschiebung in die dem kürzeren Endbereich 9 abgekehrte Richtung gesichert, indem er an der Stützstelle 11 des Gehäuses 1 ansteht. Der längere Teilbereich 10 des Haltefederdrahtes 4 kann auf seitliche Ausbiegungen beansprucht werden. Es ist noch zu beachten, dass die kürzeren Endbereiche 9 der abgewinkelten Haltefederdrähte 4 mit der Längsrichtung der Tragschiene 2 einen grösseren spitzen Winkel einschliessen als die im Gehäuse 1 gehaltenen längeren Teilbereiche 10.

Die längeren Teilbereiche 10 von zwei Haltefederdrähten 4 schliessen einstückig an einem Basisteil 12 in zwei Biegeknien 13 an. Der Basisteil 12 ist mit den Haltefederdrähten 4 einstückig aus dem gleichen Material geformt. Die Biegeknie 13 stehen an den Stützstellen 11 des Gehäuses 1 an.

Der Basisteil 12 ist an seinem für die Befestigung im Gehäuse 1 vorgesehenen Teil W-förmig gebogen, wobei das W-förmige Gebilde an der Mitte und beidseitig von der Mitte im Gehäuse gehalten ist. Die Halterung erfolgt unter elastischer Deformation an Haltefortsätzen des Gehäuses 1.

Beim Befestigen des Gehäuses 1 an der Tragschiene 2 wird das Gehäuse 1 schräg an die Randleiste 6 gedrückt, wobei die Spitzen 5 der Haltefederdrähte 4 in die Rastnut des Gehäuses 1 federnd zurückweichen, so dass das Gehäuse 1 an der gegenüberliegenden Seite heruntergedrückt werden kann. Nach Loslassen des Gehäuses 1 drücken die Haltefederdrähte 4 die Rastnut 7 des Gehäuses 1 über die Randleiste 8. Das Gehäuse 1 ist so auf der Tragschiene 2 befestigt.

Beim Wegnehmen des Schnellmontagesockels von der Tragschiene 2 wird das Gehäuse 1 zur Tragschiene 2 zugedrückt, so dass die Spitzen 5 der Haltefederdrähte 4 in das Gehäuse zurückgedrückt werden. Auf diese Weise verlässt die Randleiste 8 die Rastnut 7 an der den Haltefederdrähten 4 gegenüberliegenden Seite des Gehäuses 1. In dieser Stellung kann das Gehäuse 1 und der ganze Schnellmontagesockel von der Tragschiene 2 weggeschwenkt und anschliessend weggenommen werden.

Im Betrieb kann das Gehäuse 1 des Schnellmontagesockels auf der Tragschiene 2 in Längsrichtung nicht wegrutschen oder weggeschoben werden, weil die Spitzen 5 der Haltefederdrähte 4 sich in die Randleiste 6 der Tragschiene 2 verkrallen und die dabei auf Druck beanspruchten Haltefederdrähte 4 sich an den Stützstellen 11 des Gehäuses 1 abstützen. Mit zwei einander abgekehrten Haltefederdrähten 4 ist das Wegrutschen des Schnellmontagesockels auf der Tragschiene 2 in beiden Richtungen verhindert. Die Anordnung ist selbstsperrend.

## Patentansprüche

1. Schnellmontagesockel zur Befestigung eines elektrischen Bauteils an einer Tragschiene (2) mit Randleisten (6, 8), mit einem Gehäuse (1) aus Kunststoff, mit mindestens einem in einen der Tragschiene (2) zugekehrten Hohlraum (3) des Gehäuses (1) eingelegten Haltefederdraht (4), der im Betrieb an einer Randleiste (6) der Tragschiene (2) federnd ansteht und dabei eine gegenüberliegende Rastnut (7) des Gehäuses (1) an die gegenüberliegende Randleiste (8) der Tragschiene (2) drückt und der bei der Wegnahme des Gehäuses (1) von der Tragschiene (2) durch Verschiebung des Gehäuses (1) gegen die Wirkung des Haltefederdrahtes (4) in das Gehäuse (1) zurückgedrückt werden kann, wobei die gegenüberliegenden Randleiste (8) der Tragschiene (2) an der dem Haltefederdraht (4) gegenüberliegenden Seite des Gehäuses (1) die Rastnut (7) verlässt und die Wegnahme des Gehäuses (1) von der Tragschiene (2) ermöglicht, **dadurch gekennzeichnet, dass** der Endbereich des Haltefederdrahtes (4) scharfkantig abgeschlossen ist, und mit seiner Spitze (5) an der Randleiste (6) der Tragschiene (2) unter einem spitzen Winkel selbstsperrend ansteht, wobei der Haltefederdrahr (4) im Gehäuse (1) in die dem an der Tragschiene anstehenden Endbereich abgekehrte Richtung gegen Längsverschiebung gesichert aber eine Ausbiegung zulassend gehalten ist.

2. Schnellmontagesockel nach Anspruch 1, **dadurch gekennzeichnet, dass** der Haltefederdraht (4) eine abgewinkelte Form mit zwei zueinander unter einem stumpfen Winkel stehenden Geraden aufweist, dessen kürzerer Endbereich (9) scharfkantig abgeschlossen ist und mit seiner Spitze (5) an der Randleiste (6) der Tragschiene (2) unter einem spitzen Winkel selbstsperrend ansteht und dessen längerer, daran anschliessender Teilbereich (10) im Gehäuse (1) in die dem kürzeren Endbereich (9) abgekehrte Richtung gegen Längsverschiebung gesichert aber eine Ausbiegung zulassend gehalten ist, wobei der kürzere Endbereich (9) des abgewinkelten Haltefederdrahtes (4) mit der Längsrichtung der Tragschiene (2) einen grösseren spitzen Winkel einschliesst als der am Gehäuse (1) gehaltene längere Teilbereich (10).

3. Schnellmontagesockel nach einem der Ansprüche 1 bis 2, **dadurch gekennzeichnet, dass** zwei einander abgekehrt ausgerichtete Haltefederdrähte (4) an den beiden Enden eines in den Hohlraum (3) des Gehäuses (1) befestigten Basisteils (12) in zwei Biegeknien (13) einstückig anschliessen, wobei die Haltefederdrähte (4) und der Basisteil (12) aus einem Federdraht einstückig geformt sind und die beiden Biegeknie (13) an Stützstellen (11) des Gehäuses (1) anstehen.

4. Schnellmontagesockel nach Anspruch 2, **dadurch gekennzeichnet, dass** die längeren Teilbereiche (10) von zwei einander abgekehrten, abgewinkelten Haltefederdrähten (4) an den beiden Enden eines in den Hohlraum (3) des Gehäuses (1) befestigten Basisteils (12) in zwei Biegeknien (13) einstückig anschliessen, wobei die Haltefederdrähte (4) und der Basisteil (12) aus einem Federdraht einstückig geformt sind und die beiden Biegeknie (13) an Stützstellen (11) des Gehäuses (1) anstehen.

5. Schnellmontagesockel nach einem der Ansprüche 3 bis 4, **dadurch gekennzeichnet, dass** die Befestigung des Basisteils (12) im Gehäuse (1) mit einem an der Mitte und beidseitig von der Mitte im Gehäuse (1) gehaltenen W-förmig gebogenen Teil des Federdrahtes erfogt.

## Claims

1. A quick-fastener for fixing an electrical component on a support rail (2) with flanges (6, 8) comprising a housing (1) of synthetic material, at least one retaining wire-spring (4) which is inserted into a cavity (3) in the housing (1) facing the support rail (2) and which rests resiliently on one flange (6) of the support rail (2) when in its functional position and thereby presses an oppositely located detent groove (7) of the housing (1) onto the opposite flange (8) of the support rail (2), and which, during the process of removing the housing (1) from the support rail (2), can be pressed back into the housing (1) by displacing the housing (1) against the effect of the retaining wire-spring (4), whereby said opposite flange (8) of the support rail (2) on the side of the housing (1) opposite the retaining wire-spring (4) leaves the detent groove (7) and permits the housing (1) to be removed from the support rail (2), characterised in that the end section of the retaining wire-spring (4) terminates in a sharp edge and the apex (5) thereof rests in self-locking manner on the flange (6) of the support rail (2) at an acute angle, whereby the retaining wire-spring (4) in the housing (1) is secured against longitudinal displacement in the direction away from the end section resting on the support rail but is held so as to allow bending thereof.

2. A quick-fastener in accordance with Claim 1, characterised in that the retaining wire-spring (4) has an angled shape comprising two straight sections which are mutually inclined at an obtuse angle, the shorter end section (9) of the retaining wire-spring terminating in a sharp edge with the apex (5) thereof resting in self-locking manner on the flange (6) of the support rail (2) at an acute angle whilst the longer partial section (10) adjoined thereto in the housing (1) is secured against longitudinal displacement in the direction away from the shorter end section (9) but is held so as to allow bending thereof, whereby the shorter end section (9) of the angled retaining wire-spring (4) includes a greater acute angle with the support rail (2) in the longitudinal direction thereof than does the longer partial section (10) held on the housing (1).

3. A quick-fastener in accordance with any of the Claims 1 to 2, characterised in that two mutually oppositely aligned retaining wire-springs (4) are joined to the two ends of a base portion (12) fixed in the cavity (3) in the housing (1) at two curved knee sections (13) in one-piece manner, whereby the retaining wire-springs (4) and the base portion (12) are made of spring wire as a one-piece structure and the two curved knee sections (13) rest on support locations (11) of the housing (1).

4. A quick-fastener in accordance with Claim 2, characterised in that the longer partial sections (10) of two mutually oppositely aligned, angled retaining wire-springs (4) are joined to the two ends of a base portion (12) fixed in the cavity (3) in the housing (1) at two curved knee sections (13) in one-piece manner, whereby the retaining wire-springs (4) and the base portion (12) are made of spring wire as a one-piece structure and the two curved knee sections (13) rest on support locations (11) of the housing (1).

5. A quick-fastener in accordance with any of the Claims 3 to 4, characterised in that the base portion (12) is fixed in the housing (1) by means of a W-shaped curved portion of the spring wire which is held in the housing (1) at the centre and on each side of the centre.

## Revendications

1. Socle à montage rapide pour fixer un composant électrique sur un rail porteur (2) équipé de rebords (6, 8), dans lequel :
• il est prévu un boîtier en matière plastique présentant en regard du rail (2) un volume creux (3) dans lequel est inséré au moins un fil élastique (4)de maintien qui, en service, est appliqué élastiquement sur un rebord (6) du rail et pousse ainsi élastiquement la rainure d'arrêt (7) située du côté opposé du boîtier (1) contre le rebord correspondant (8) du rail porteur (2),
• pour séparer le boîtier (1) du rail porteur (2) en faisant coulisser le boîtier (1) contre l'action du fil élastique de maintien (4), on peut repousser celui-ci dans le boîtier de sorte que le rebord (8) opposé du rail quitte la rainure d'arrêt (7) située sur le côté du boîtier (1) éloigné du fil élastique (4) et permet ainsi de séparer le boîtier (1) du rail (2),
caractérisé en ce que
l'extrémité du fil élastique de maintien (4) se termine par un bord acéré formant une pointe (5) qui est en appui auto-bloquant sur le rebord (6) du rail porteur (2) en faisant avec ce rebord un angle aigu, tandis qu'à l'intérieur du boîtier (1) , le fil élastique de maintien (4) est maintenu sûrement à l'abri d'un coulissement longitudinal dans la direction opposée à celle de la partie extrême en appui sur le rail, tout en pouvant fléchir.

2. Socle à montage rapide selon la revendication 1,
caractérisé en ce que
le fil élastique de maintien (4) a une forme coudée comportant deux parties droites faisant entre elles un angle obtus et dont la partie d'extrémité (9), plus courte, se termine par un bord acéré formant une pointe (5) en appui autobloquant, sous un angle aigu, sur le rebord (6) du rail porteur (2) tandis que la partie plus longue (10), qui lui fait suite est maintenue dans le boîtier (1) sûrement à l'abri d'un coulissement longitudinalement dans le sens opposé à celui de la partie extrême courte (9), tout en pouvant fléchir, la partie extrême courte (9) du fil élastique de maintien (4) faisant avec la direction longitudinale du rail porteur (2) un angle aigu supérieur à celui que fait avec cette direction la partie plus longue (10) maintenue dans le boîtier.

3. Socle à montage rapide selon la revendications 1 ou 2,
caractérisé en ce que
deux fils élastiques de maintien (4) orientés à l'opposé l'un de l'autre sont raccordés sans discontinuité par deux coudes de flexion (13) aux deux extrémités d'une partie de base (12) fixée dans le volume creux (3) du boîtier (1), les fils élastiques de maintien (4) ainsi que la partie de base (12) constituant une seule pièce formée à partir d'un fil élastique, tandis que les deux coudes de flexion (13) reposent sur deux points d'appui (11) du boîtier (1).

4. Socle à montage rapide selon la revendications 2,
caractérisé en ce que
les parties longues (10) de deux fils élastiques de maintien (4) coudés et orientés à l'opposé l'un de l'autre sont raccordées sans discontinuité par deux coudes de flexion (13) aux deux extrémités d'une partie de base (12) fixée dans le volume creux (3) du boîtier (1), les fils élastiques de maintien (4) ainsi que la partie de base (12) constituant une seule pièce formée à partir d'un fil élastique, tandis que les deux coudes de flexion (13) reposent sur deux points d'appui (11) du boîtier (1).

5. Socle à montage rapide selon la revendications 3 ou 4,
caractérisé en ce que
la fixation de la partie de base (12) dans le boîtier (1) est assurée par pliage en forme de W d'une partie du fil élastique, au milieu et de part et d'autre du milieu du boîtier (1).
